# FASCICULE DE BREVET EUROPEEN

(11) **EP 2 997 343 B1**
(45) Date de publication et mention de la délivrance du brevet: **28.07.2021**
(21) Numéro de dépôt: 14755127.9
(22) Date de dépôt: 20.05.2014
(51) Int. Cl.: G01M 15/12, G05B 23/02

(54) **PROCÉDÉ ET SYSTÈME D'ANALYSE VIBRATOIRE D'UN MOTEUR**
VERFAHREN UND SYSTEM ZUR VIBRATIONSANALYSE EINES MOTORS
METHOD AND SYSTEM FOR THE VIBRATION ANALYSIS OF AN ENGINE

(30) Priorité: 17.05.2013 FR 1354483
(43) Date de publication de la demande: 23.03.2016
(73) Titulaire: Safran Aircraft Engines, 75015 Paris (FR)
(72) Inventeur: LACAILLE, Jérôme, F-77550 Moissy-Cramayel Cedex (FR)
(74) Mandataire: Brevalex
(86) Numéro de dépôt international: PCT/IB2014/001349
(87) Numéro de publication internationale: WO 2014/184657

(56) Documents cités:
- FR-A1- 2 939 924
- JACKSON T ET AL: "An Architecture for Distributed Search and Data-Mining in Condition Monitoring Applications", AEROSPACE CONFERENCE, 2007 IEEE, IEEE, PISCATAWAY, NJ, USA, 3 mars 2007 (2007-03-03), pages 1-12, XP031214372, ISBN: 978-1-4244-0524-4
- FLETCHER M ET AL: "The signal data explorer: a high performance grid based signal search tool for use in distributed diagnostic applications", CLUSTER COMPUTING AND THE GRID, 2006. CCGRID 06. SIXTH IEEE INTERNATIONAL SYMPOSIUM ON - SINGAPORE 16-19 MAY 2006, PISCATAWAY, NJ, USA,IEEE, 16 mai 2006 (2006-05-16), pages 8pp-224, XP032120658, DOI: 10.1109/CCGRID.2006.102 ISBN: 978-0-7695-2585-3

## Description

### DOMAINE DE L'INVENTION

La présente invention se rapporte au domaine de surveillance d'un moteur. En particulier, l'invention concerne un procédé et un système d'analyse vibratoire d'un moteur pour détecter des anomalies ou pronostiquer le comportement du moteur.

Un moteur est soumis à des contraintes mécaniques qui peuvent engendrer l'usure de ses éléments. Une manière efficace de surveiller l'état d'un moteur ou son comportement futur et de mesurer sa signature vibratoire qui représente une des caractéristiques fondamentales du moteur.

Plus particulièrement, dans le cas d'un moteur d'aéronef, des capteurs de vibration du type accéléromètres sont utilisés pour mesurer les vibrations émises par le moteur. Toutefois, la signature vibratoire du moteur est très difficile à obtenir car elle est issue de mesures accélérométriques et tachimétriques acquises à très haute fréquence (de l'ordre de 50 kHz). De telles mesures ne peuvent pas être transmises au sol pour une analyse détaillée et les algorithmes embarqués actuellement recherchent uniquement des modèles connus et ne sont pas validés sur des fonctionnements en opération réelle. Il se trouve souvent que de tels algorithmes apparaissent inefficaces car les conditions d'acquisition des données ne sont pas celles espérées lors de la conception de l'algorithme. Par ailleurs, la mise en œuvre d'un algorithme sur un calculateur embarqué d'un moteur est un processus complexe et coûteux, aussi on aura tendance à construire des algorithmes généraux qui se calibrent sur une famille de moteurs et ne sont pas adaptés à un moteur spécifique. En outre, les calculateurs embarqués ne sont pas actuellement capables d'adapter à la volée un algorithme, et les processus de certification pour de tels outils intelligents ne sont pas encore définis.

En revanche, tout nouveau moteur, en sortant de la ligne d'assemblage passe un test de réception sur un banc d'essais. Les vibrations du moteur sont mesurées, pour deux phases de fonctionnement distinctes. En effet, les signaux sont acquis à l'aide de deux accéléromètres pendant une phase d'accélération du moteur, puis une phase de décélération. Chaque contexte est étudié par l'intermédiaire de deux canaux et une image spectrale (spectrogramme) est alors calculée pour chaque signal de vibration. Un spectrogramme caractérise l'énergie du signal pour une fréquence de vibration donnée et une vitesse de rotation de l'arbre. La vitesse de rotation est définie par des indicateurs notés N1 et N2 qui mesurent respectivement la vitesse de rotation de l'arbre basse pression et la vitesse de rotation de l'arbre haute pression. Il est aussi possible de représenter les données sous la forme de spectrogrammes dans le domaine des ordres (i.e., quand le temps est remplacé par le nombre de rotations d'un arbre). Après chaque banc d'essai, un moteur est ainsi caractérisé par plusieurs spectrogrammes correspondant aux différents contextes de fonctionnement étudiés.

Actuellement, les experts dans l'analyse des vibrations, scrutent visuellement chaque spectrogramme dans le but de détecter des anomalies énergétiques du moteur. Souvent la signature intéressante apparaît au sein d'une ou plusieurs petites fenêtres extraites de toutes ces représentations graphiques. On peut aussi lui adjoindre des informations de contextes issues du fonctionnement du moteur, comme les vitesses de rotation des arbres, des températures, pression, et flux de carburant ainsi que des informations descriptives de l'état du moteur : position de vannes, géométrie des stators, etc.

L'analyse des experts est basée sur leur expertise métier, mais également sur l'expérience d'analyse de l'ensemble des spectrogrammes déjà déterminés pour des moteurs comparables, disponible dans une base de données de référence. Par exemple, lors de l'étude d'un spectrogramme donné, une zone peut apparaître à l'expert comme étant atypique et donc jugée suspecte car peu probable. S'il apparaît que la zone atypique a déjà été constatée dans un autre essai moteur de la base de données de référence, la singularité observée n'est plus étiquetée comme suspecte. L'expert peut finalement placer un label sur la donnée pour de futures utilisations.

Le travail de comparaison est complexe, fastidieux et fortement lié à l'analyste et à son expérience opérationnelle. Une des difficultés de ce travail est qu'il n'est pas possible de définir un unique spectrogramme de référence. Chaque spectrogramme doit être implicitement comparé à l'ensemble des spectrogrammes déjà observés. Il est connu du document JACKSON T ET AL, "An Architecture for Distributed Search and Data-Mining in Condition Monitoring Applications" (XP031214372) une méthode d'exploration de données à partir de grands ensembles de données relatives à des moteurs d'aéronefs. Le document FR 2 939 924 A1 concerne un procédé d'identification de défaillances dans un moteur d'aéronef.

L'objet de la présente invention est par conséquent de proposer un système et un procédé d'analyse vibratoire d'un moteur sans présenter les inconvénients précités et en particulier, en mettant en oeuvre une fonction de navigation permettant d'accéder de manière simple et rapide à des comportements vibratoires similaires des moteurs analogues afin de bénéficier des analyses et expertises déjà réalisées précédemment.

### OBJET ET RÉSUME DE L'INVENTION

La présente invention concerne un procédé d'analyse vibratoire d'un moteur, comportant les étapes suivantes :
- acquisition spectrale de signaux vibratoires relatifs au moteur pour former au moins un spectrogramme représentatif d'un état de fonctionnement dudit moteur,
- sélection d'au moins une zone d'intérêt dans ledit au moins un spectrogramme,
- comparaison de chaque zone d'intérêt à un ensemble de zones de comparaison correspondantes appartenant à des spectrogrammes annotés enregistrés dans une base de données de référence, pour déterminer un sous-ensemble de zones de comparaison ayant des comportements vibratoires similaires à ceux de ladite zone d'intérêt, et
- récupération dudit sous-ensemble de zones de comparaison et des annotations associées audit sous-ensemble de zones de comparaison.

Le procédé permet de calculer et lister rapidement et automatiquement pour chaque nouveau moteur les comportements vibratoires les plus similaires des moteurs déjà analysés. Ce procédé offre ainsi une fonction de navigation permettant d'accéder aux données des moteurs analogues afin de bénéficier des analyses et expertises réalisées précédemment sur des comportements vibratoires similaires. Ceci permet d'interpréter les images spectrales pour détecter des anomalies ou pronostiquer le comportement futur du moteur de manière simple, rapide et à moindre coût.

Avantageusement, l'étape de comparaison comporte :
- la construction pour chaque zone d'intérêt d'un vecteur d'intérêt représentatif de ladite zone d'intérêt en projetant ladite zone d'intérêt sur un espace de représentation sous-jacent,
- la construction d'un ensemble de vecteurs de comparaison représentatif dudit ensemble de zones de comparaison en projetant chacune desdites zones de comparaison sur ledit espace de représentation,

- le calcul d'un score de similitude entre ledit vecteur d'intérêt et chacun desdits vecteurs de comparaison pour déterminer un sous-ensemble de vecteurs de comparaison présentant un score de similitude supérieure à un niveau prédéterminé, et
- la sélection dudit sous-ensemble de zones de comparaison associé audit sous-ensemble de vecteurs de comparaison.

La projection des zones spectrales sur un espace de représentation permet d'introduire une métrique de comparaison pour trouver les zones de comparaison les plus proches de la zone d'intérêt indiquant ainsi les moteurs appartenant à la base de référence dont le comportement est le plus proche du moteur étudié. Ceci permet d'optimiser le diagnostic tout en le rendant le plus objectif possible.

Avantageusement, le procédé comporte les étapes suivantes :
- l'annotation de ladite zone d'intérêt, et
- l'enregistrement dans la base de données de référence de ladite zone d'intérêt, de l'annotation associée à ladite zone d'intérêt ainsi que du spectrogramme contenant ladite zone d'intérêt.

Ceci permet d'enrichir et d'actualiser la base de données de référence.

Avantageusement, la projection sur l'espace de représentation est réalisée selon un modèle de projection ou une combinaison de modèles de projection parmi les modèles suivants : modèle physique, modèle par apprentissage, et modèle mathématique.

Avantageusement, le procédé comporte un affichage d'une liste dudit sous-ensemble de zones de comparaison diagnostiquées comme étant les plus proches de la zone d'intérêt.

Avantageusement, ladite liste dudit sous-ensemble de zones de comparaison est classée par ordre décroissant de similitude et comporte des données statistiques et des annotations.

Avantageusement, le procédé comporte une étape de nettoyage dudit au moins un spectrogramme ou de ladite au moins une zone d'intérêt au moyen d'un algorithme de dé-bruitage.

Avantageusement, l'algorithme de dé-bruitage correspond à un modèle paramétrique d'une loi Gamma, un modèle statistique, ou un modèle de déphasage.

Avantageusement, chaque zone de comparaison est comprise dans un domaine spectral correspondant à un voisinage de la zone d'intérêt.

Selon un mode de réalisation de l'invention, le moteur est un moteur d'aéronef, et l'acquisition spectrale de signaux vibratoires est réalisée en mesurant les vibrations du moteur pendant des phases d'accélération et de décélération en fonction des vitesses de rotation basse pression et haute pression pour former un ensemble de spectrogrammes correspondant à des contextes de fonctionnement du moteur.

L'invention vise également un système d'analyse vibratoire d'un moteur, comportant:
- des moyens de traitement pour acquérir des signaux vibratoires relatifs au moteur et pour former au moins un spectrogramme représentatif d'un état de fonctionnement dudit moteur,
- des moyens de traitement pour sélectionner au moins une zone d'intérêt dans ledit au moins un spectrogramme,
- des moyens de traitement pour comparer chaque zone d'intérêt à un ensemble de zones de comparaison correspondantes appartenant à des spectrogrammes annotés enregistrés dans une base de données de référence, et pour déterminer un sous-ensemble de zones de comparaison ayant des comportements vibratoires similaires à ceux de ladite zone d'intérêt, et
- des moyens de sortie pour afficher ledit sous-ensemble de zones de comparaison et des annotations associées audit sous-ensemble de zones de comparaison.

### BRÈVE DESCRIPTION DES DESSINS

D'autres particularités et avantages du dispositif et du procédé selon l'invention ressortiront mieux à la lecture de la description faite ci-après, à titre indicatif mais non limitatif, en référence aux dessins annexés sur lesquels :
- la Fig. 1 illustre de manière schématique un exemple de moyens matériels mis en œuvre dans le système ou procédé d'analyse vibratoire d'un moteur, selon l'invention ;
- la Fig. 2 est un exemple d'un spectrogramme représentant un signal de vibration lors d'une phase d'accélération du moteur ;
- les Figs. 3A-3C illustrent un exemple d'analyse vibratoire selon un mode de réalisation de l'invention ; et
- la Fig. 4 illustre un procédé d'analyse vibratoire selon un mode préféré de réalisation de l'invention.

### DESCRIPTION DÉTAILLÉE DE MODES DE RÉALISATION

Le principe de l'invention consiste à implémenter une métrique adaptée pour comparer une fenêtre spectrale d'un moteur à analyser avec des fenêtres spectrales relatives à d'autres moteurs, contenues dans une base de données de référence. Ceci permet d'exploiter au mieux et de manière automatique la base de données de référence.

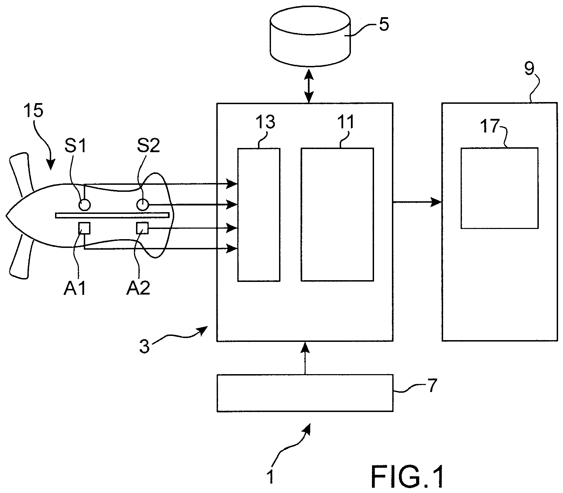

La Fig. 1 illustre un exemple de moyens matériels mis en œuvre dans le système ou procédé d'analyse vibratoire d'un moteur et plus particulièrement d'un moteur d'aéronef, selon l'invention.

Le système 1 d'analyse vibratoire comporte des moyens de traitement 3, des moyens de stockage 5, des moyens d'entrée 7, et des moyens de sortie 9.

Les moyens de traitement 3 comportent des moyens de calcul 11 ainsi que des moyens d'acquisition 13 pour acquérir des signaux en provenance des capteurs A1, A2, S1, S2 installés dans le moteur 15.

En effet, des capteurs de vibration, de vitesse, de températures de pression, etc. sont intégrés dans le moteur 15 de l'aéronef pour recueillir au cours du temps des mesures sur des variables relatives au moteur et son environnement.

Plus particulièrement, un moteur 15 d'aéronef en opération comporte, en général, deux accéléromètres A1, A2. Un premier accéléromètre A1 est installé au niveau de l'arbre moteur de basse pression (LP) pour mesurer les vibrations relatives à des composants de basse pression et un deuxième accéléromètre A2 est installé au niveau de l'arbre moteur de haute pression (HP) pour mesurer les vibrations relatives à des composants de haute pression. A titre d'exemple, les accéléromètres ont une résolution fréquentielle de 3,125 Hz, une largeur de bande supérieure à 5 kHz et une fréquence d'acquisition de 51 kHz.

Le moteur 15 comporte également deux roues phoniques S1, S2 pour mesurer respectivement les vitesses de rotation courantes N1 et N2 des arbres basse pression LP et haute pression HP.

Les moyens d'acquisition 13 sont configurés pour acquérir les vibrations et vitesses de rotation du moteur 15 lors de deux phases opérationnelles distinctes. Chaque phase est décomposée en une suite d'intervalles temporels réguliers où la vitesse de rotation est considérée comme étant constante sur chaque intervalle.

Les moyens de calcul 11 sont configurés pour calculer au moins une image spectrale (ou spectrogramme) pour chaque signal de vibration, représentative d'un état de fonctionnement du moteur 15. Le spectrogramme est par exemple affiché sur un écran ou une interface graphique 17 comprise dans les moyens de sortie 9.

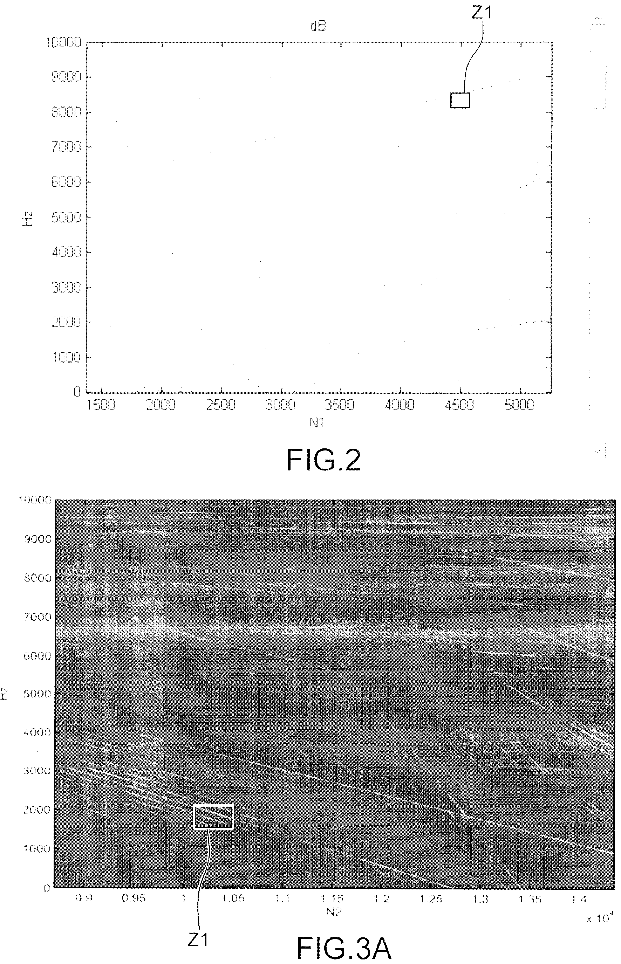

En effet, la Fig. 2 est un spectrogramme du type diagramme de Campbell représentant un signal de vibration lors d'une phase d'accélération.

L'axe des abscisses représente la vitesse de rotation et l'axe des ordonnées représente la fréquence ou l'ordre de l'arbre de rotation. Le diagramme de Campbell caractérise l'énergie du signal pour une fréquence de vibration et une vitesse de rotation de l'arbre. En général, différentes couleurs sont utilisées pour représenter différents niveaux d'énergies.

Ainsi, les données de vibration sont automatiquement visualisées sur l'interface graphique 17 sous formes de spectrogrammes selon des modes de modulation et de domaines de représentation temps-fréquence prédéterminés. Un domaine est une représentation des données en temps ou en ordre, l'ordre étant soit un nombre de tours d'un arbre soit un ordre virtuel par exemple basé sur la différence (ou la somme) des vitesses de rotation (N2-N1 ou N2+N1) pour l'étude des paliers inter-arbres.

Par ailleurs, les moyens d'entrée 7 comportent des outils habituels (par exemple, souris, stylet, clavier, écran tactile) qui sont adaptés pour permettre la sélection d'au moins une fenêtre ou zone d'intérêt Z1.

La zone d'intérêt Z1 est délimitée par un intervalle de fréquence et de vitesse dans le spectrogramme affiché sur l'interface graphique 17. Elle est définie par le type de représentation et éventuellement en fonction du type d'anomalie recherchée ou le type de modulation (harmonique). Par exemple, une fenêtre d'intérêt Z1 peut être définie sur une représentation du type temps-fréquence en sélectionnant une fréquence donnée ou une vitesse donnée, considérées comme pertinentes pour surveiller par exemple une pièce particulière qui peut s'user plus rapidement que d'autres.

La fenêtre d'intérêt Z1 correspond ainsi à un masque temps-fréquence défini graphiquement sur un ou plusieurs domaines. Les harmoniques peuvent être prises en compte de manière automatique par des masques en peigne.

Les moyens de traitement 3 sont configurés pour comparer chaque zone d'intérêt Z1 sélectionnée à un ensemble de zones de comparaison correspondantes appartenant à des spectrogrammes éventuellement annotés et enregistrés dans une base de données de référence stockée dans les moyens de stockage 5. La base de données de référence contient une liste de moteurs et d'essais, des mesures vibratoires, des mesures contextuelles (température, pression, etc.) et plus particulièrement, des spectrogrammes annotés correspondant à la liste de moteurs. Les moyens de traitement 3 sont configurés pour rechercher à partir de la zone d'intérêt Z1 sélectionnée et d'une métrique prédéterminée, un sous-ensemble de zones de comparaison ayant des comportements vibratoires similaires à ceux de la zone d'intérêt.

La métrique fait intervenir un modèle de filtrage temps-fréquence basé sur des décompositions. En effet, afin de comparer une zone d'intérêt Z1 à un ensemble de zones de comparaison, les différentes zones sont projetées sur un espace de dimension réduite muni d'une métrique. Ainsi, les différentes zones peuvent être analysées par des descripteurs qui permettent de calculer des indicateurs pertinents et robustes qui peuvent ensuite être facilement comparés à l'aide d'une métrique pertinente pour l'application.

La métrique peut par exemple être définie sur un espace de représentation ou un espace de texture dans lequel les zones spectrales sont projetées selon un modèle de projection physique, ou un modèle de projection empirique par apprentissage, ou un modèle de projection mathématique. En variante, les zones spectrales peuvent être projetées selon une combinaison d'au moins deux modèles de projection parmi les modèles de projection physique, empirique ou mathématique.

Le modèle physique est par exemple prédéfini par l'expert selon un niveau d'énergie maximale, une énergie totale, une distribution d'énergie, un indicateur d'excès de masse, ou d'autres indicateurs.

Le modèle par apprentissage peut correspondre à une régression linéaire selon par exemple une analyse en composantes principales PCA (Pricipal Component Analysis) qui permet de trouver automatiquement l'espace sur lequel on projette. Un autre modèle par apprentissage plus avantageux correspond à une factorisation matricielle non-négative NMS (Non-Negative Matrix Factorisation). Ce deuxième modèle empirique est similaire au PCA mais avec seulement des combinaisons linéaires positives, et a surtout l'avantage d'être physiquement interprétable par les experts. On peut aussi utiliser un modèle de représentation parcimonieuse « sparse code representation » où on projette sur des textures réelles extraites des données vibratoires connues.

Le modèle mathématique est par exemple basé sur des filtres de courbelettes (curvelets). Ce modèle formé de raies et de points ne nécessite pas un apprentissage et de plus a l'avantage d'être physiquement interprétable.

Ainsi, quand l'utilisateur définit intuitivement une zone d'intérêt Z1 sur une représentation graphique, les moyens de traitement 3 lui associent des coefficients dans un espace de représentation sous-jacent. Ces coefficients peuvent éventuellement correspondre à une visualisation un peu différente de la zone que l'utilisateur expérimenté peut visualiser pour améliorer sa définition de zone d'intérêt.

Quel que soit le modèle de projection utilisé, les moyens de calcul 11 sont configurés pour projeter la zone d'intérêt Z1 sélectionnée ainsi que chacune des zones de comparaison sur l'espace de représentation sous-jacent afin de construire un vecteur d'intérêt représentatif de la zone d'intérêt ainsi qu'un ensemble de vecteurs de comparaison représentatif de l'ensemble de zones de comparaison. Ainsi, une zone qui est constitué d'un grand nombre de pixels (par exemple, 64x64) est remplacée par un vecteur de dimension plus réduite (par exemple, une dizaine de valeurs) dans un espace de représentation. L'espace de représentation peut être défini selon un référentiel d'indicateurs descriptifs ou selon un référentiel d'identificateurs de texture.

Avantageusement, chaque zone de comparaison est choisie pour être comprise dans un domaine spectral correspondant à un voisinage de la zone d'intérêt. En effet, il est avantageux de rechercher une zone similaire dans un domaine un peu plus large que celui de la zone d'intérêt afin de tenir compte d'une certain souplesse de paramétrage ainsi que des légers décalages qui peuvent exister entre différents moteurs qui ne sont pas tous parfaitement identiques.

En outre, les moyens de calcul 11 sont configurés pour calculer un score de similitude entre le vecteur d'intérêt et chacun des vecteurs de comparaison pour déterminer un sous-ensemble de vecteurs de comparaison présentant un score de similitude supérieur à un niveau prédéterminé. Ceci permet aux moyens de traitement 3 de sélectionner au moins une partie du sous-ensemble de zones de comparaison associé au sous-ensemble de vecteurs de comparaison.

Avantageusement, les moyens de traitement 3 affichent sur l'interface graphique 17, une liste des zones de comparaison de la base de données de référence diagnostiquées comme étant les plus proches de la zone d'intérêt Z1 étudiée. La liste des zones de comparaison est avantageusement classée par ordre décroissant de similitude et comporte des données statistiques et des annotations.

Les moyens de traitement 3 permettent ainsi d'indiquer à l'utilisateur les moteurs appartenant à la base de données de référence dont le comportement est le plus proche du moteur étudié.

Les Figs. 3A-3C illustrent un exemple d'analyse vibratoire selon un mode de réalisation de l'invention.

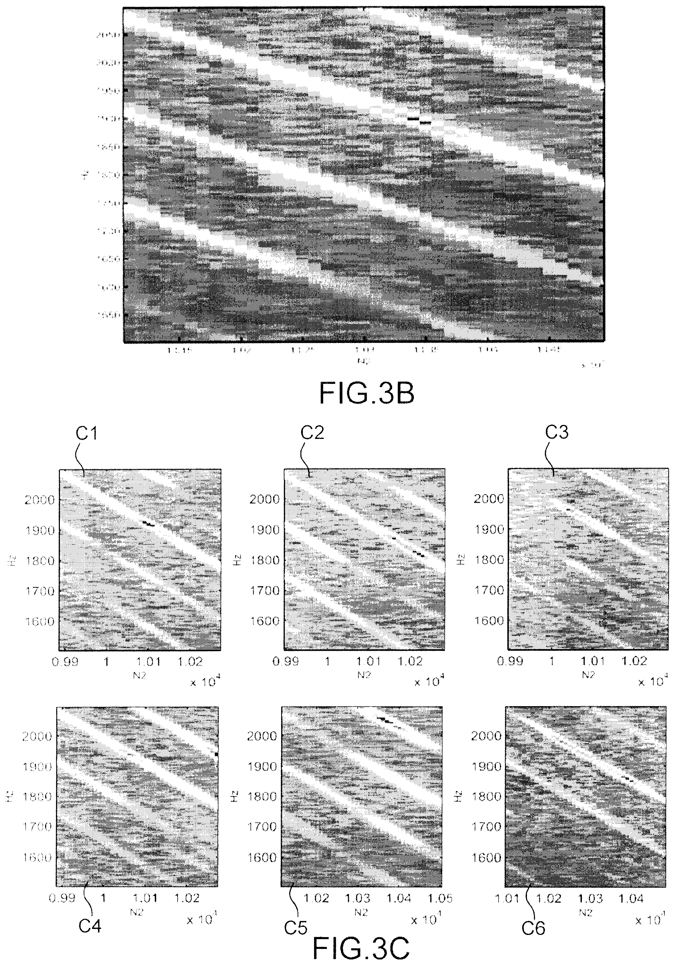

La Fig. 3A montre un diagramme de Campbell synchronisé sur l'arbre à haute pression (N2) dans lequel une zone d'intérêt Z1 a été sélectionnée par un utilisateur. L'utilisateur cherche par exemple des configurations vibratoires spécifiques correspondant à des défauts connus pouvant apparaître dans cette zone d'intérêt. Un élargissement (zoom) de la zone d'intérêt Z1 est représenté sur la Fig. 3B.

Cet exemple utilise le modèle de projection NMS pour trouver les zones de comparaison les plus proches de la zone d'intérêt.

En effet, la Fig. 3C illustre six petites images C1-C6 représentant les zones de comparaison présentant le plus de similitude avec la zone d'intérêt Z1.

Cette liste de six zones de comparaison C1-C6 est affichée sur l'interface graphique 17 avec éventuellement des annotations correspondantes permettant à l'utilisateur de tirer bénéfice d'une analyse faite précédemment par un expert sur un comportement vibratoire similaire.

L'utilisateur peut également utiliser les moyens d'entrée 7 pour apporter des annotations aux zones d'intérêt étudiées. Chaque zone d'intérêt, son annotation associée ainsi que le spectrogramme le contenant sont avantageusement enregistrés dans la base de données de référence afin d'enrichir et d'actualiser la base de données de référence. Les annotations peuvent être catégorisées, ce qui permet par la suite, en étudiant les labels des phénomènes similaires apparus sur d'autres moteurs, d'avoir une idée rapide de ce que l'on observe.

Avantageusement, on peut utiliser un algorithme de dé-bruitage pour nettoyer la zone d'intérêt sélectionnée avant de chercher des zones de comparaison similaires. On peut aussi utiliser un algorithme de dé-bruitage sur tout le spectrogramme avant la sélection de la zone d'intérêt. Ce nettoyage permet d'observer le spectrogramme d'une façon différente.

A titre d'exemple, l'algorithme de dé-bruitage est un modèle paramétrique d'une loi Gamma, ou un modèle statistique du type « Peaks Over Top », ou un modèle de déphasage.

Le modèle paramétrique d'une loi Gamma est décrit par Tarassenko et al., dans un article intitulé « Bayesian Extreme Value Statistics for Novelty Detection in Gas-Turbine Engines », IEEE Aerospace Conference, 2008, pp. 1-11. Ce modèle permet de supprimer des bruits générés par exemple par la combustion, par l'air dans les conduites, etc. pour ne laisser que l'énergie relative aux pièces tournantes.

Le modèle statistique du type « Peaks Over Top » est décrit par Hazan et al. dans l'article « Probabilistic outlier détection in vibration spectra with small learning dataset », Mechanical Systems and Signal Processing, 2012. Ce modèle est plus simple à implémenter dans un calculateur embarqué car il n'utilise que des calculs empiriques. Il correspond à un test statistique qui permet de ne voir que les zones qui dépassent un certain niveau d'énergie habituel.

Le modèle de déphasage est décrit par Klein et al. dans « Methods for diagnostics of bearings in non-stationary environment Bearings monitoring », CM & MFPT, 2011, pp. 1-12. Ce modèle est un filtre qui permet de supprimer les effets stationnaires liés à la vitesse de rotation des arbres.

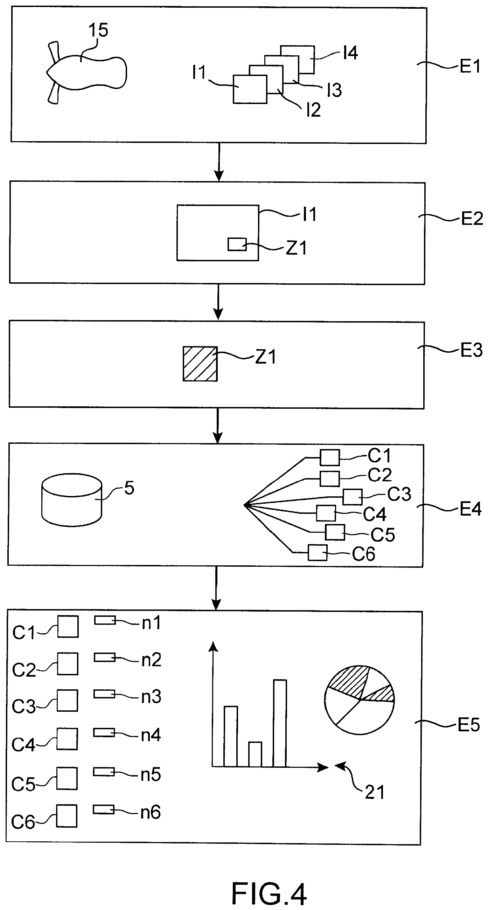

La Fig. 4 illustre un procédé d'analyse vibratoire selon un mode préféré de réalisation de l'invention.

A l'étape E1, les moyens de traitement récupèrent les données de vibrations des deux accéléromètres et les données de vitesses de rotation des deux arbres du moteur lors d'une phase d'accélération suivie par une phase de décélération. Ces données permettent aux moyens de traitement de construire plusieurs spectrogrammes I1-I4. Par exemple, des premier et deuxième spectrogrammes I1, I2 peuvent être construits lors de la phase d'accélération et des troisième et quatrième spectrogrammes I3, I4 peuvent être construits lors de la phase de décélération à partir des données mesurées par les deux accéléromètres. On peut aussi construire d'autres spectrogrammes en fonction des vitesses de rotation (N2-N1 ou N2+N1) inter-arbres.

A l'étape E2, l'utilisateur sélectionne au moins une zone d'intérêt Z1 dans au moins un spectrogramme I1. La fenêtre sélectionnée Z1 correspond par exemple à des parties connues du spectrogramme où certains disfonctionnements sont susceptibles d'être observés. Un nom représentant le défaut recherché peut être associé à chaque zone d'intérêt sélectionnée.

A l'étape E3, l'utilisateur peut associer à chaque zone d'intérêt Z1 sélectionnée un filtre de dé-bruitage pour nettoyer cette zone. L'utilisateur peut même associer plusieurs filtres ou tout simplement omettre cette étape en ne choisissant aucun filtre de dé-bruitage.

A l'étape E4, les moyens de traitement font automatiquement un tri dans la base de données de référence pour chercher pour chaque zone d'intérêt Z1 sélectionné, des spectrogrammes comportant des zones C1-C6 qui ressemblent à la zone d'intérêt Z1 sélectionné par l'utilisateur.

A l'étape E5, les moyens de traitement proposent à l'utilisateur des listes de zones C1-C6 ressemblantes aux zones d'intérêt sélectionnés. Les listes sont affichées sur l'écran et chaque liste est par exemple classée par ordre décroissant de similitude et comporte des annotations n1-n6 et des données statistiques 21. Chaque zone de ressemblance présente un niveau de confiance qui correspond au niveau de confiance qu'avait l'expert dans son analyse pondéré par le score de similitude.

L'expert peut alors lire ces annotations et les données statistiques qui peuvent l'aider à conclure et peut éventuellement enregistrer dans la base de données son propre avis sur la zone d'intérêt.

Le système selon l'invention permet ainsi de se déplacer ou de naviguer dans un espace de mesure vibratoire des moteurs afin de rechercher des comportements vibratoires similaires en bénéficiant d'une base de connaissance déjà construite par d'autres experts et qui s'enrichie à chaque nouvelle analyse.

Ainsi, par les analyses successives effectuées par les experts on construit un système de représentation graphique (noeuds et flèches) mettant en évidence les groupes de moteurs semblables en fonction des masques et des scores utilisés. Ces statistiques sont en plus grandement améliorées par le mécanisme d'expertise qui permet à l'utilisateur de rentrer ses remarques et de les catégoriser. Les résultats de synthèse obtenus ne sont plus uniquement des éléments de calculs mais aussi des informations issues d'experts.

## Revendications

1. Procédé d'analyse vibratoire d'un moteur, **caractérisé en ce qu'**il comporte les étapes suivantes executées par des moyens de traitement (3):
- acquisition spectrale de signaux vibratoires relatifs au moteur (15) pour former au moins un spectrogramme représentatif d'un état de fonctionnement dudit moteur,
- sélection d'au moins une zone d'intérêt (Z1) dans ledit au moins un spectrogramme,
- construction pour chaque zone d'intérêt (Z1) d'un vecteur d'intérêt représentatif de ladite zone d'intérêt en projetant ladite zone d'intérêt sur un espace de représentation sous-jacent,
- construction d'un ensemble de vecteurs de comparaison représentatif d'un ensemble de zones de comparaison correspondantes à ladite zone d'intérêt en projetant chacune desdites zones de comparaison sur ledit espace de représentation, ledit ensemble de zones de comparaison appartenant à des spectrogrammes annotés enregistrés dans une base de données de référence,
- calcul d'un score de similitude entre ledit vecteur d'intérêt et chacun desdits vecteurs de comparaison pour déterminer un sous-ensemble de vecteurs de comparaison présentant un score de similitude supérieure à un niveau prédéterminé,
- sélection d'un sous-ensemble de zones de comparaison (C1-C6) associé audit sous-ensemble de vecteurs de comparaison, ledit sous-ensemble de zones de comparaison (C1-C6) ayant des comportements vibratoires similaires à ceux de ladite zone d'intérêt, et
- récupération dudit sous-ensemble de zones de comparaison (C1-C6) et des annotations (n1-n6) associées audit sous-ensemble de zones de comparaison.

2. Procédé selon la revendication 1, **caractérisé en ce qu'**il comporte les étapes suivantes :
- l'annotation de ladite zone d'intérêt (Z1), et
- l'enregistrement dans la base de données de référence de ladite zone d'intérêt, de l'annotation associée à ladite zone d'intérêt ainsi que du spectrogramme contenant ladite zone d'intérêt.

3. Procédé selon la revendication 1 ou 2, **caractérisé en ce que** la projection sur l'espace de représentation est réalisé selon un modèle de projection ou une combinaison de modèles de projection parmi les modèles suivants : modèle physique, modèle par apprentissage, et modèle mathématique.

4. Procédé selon l'une quelconque des revendications précédentes, **caractérisé en ce qu'**il comporte un affichage d'une liste dudit sous-ensemble de zones de comparaison diagnostiquées comme étant les plus proches de la zone d'intérêt.

5. Procédé selon la revendication 4, **caractérisé en ce que** ladite liste dudit sous-ensemble de zones de comparaison est classée par ordre décroissant de similitude et comporte des données statistiques et des annotations.

6. Procédé selon l'une quelconque des revendications précédentes, **caractérisé en ce qu'**il comporte une étape de nettoyage dudit au moins un spectrogramme ou de ladite au moins une zone d'intérêt au moyen d'un algorithme de dé-bruitage.

7. Procédé selon la revendication 6, **caractérisé en ce que** l'algorithme de dé-bruitage correspond à un modèle paramétrique d'une loi Gamma, un modèle statistique, ou un modèle de déphasage.

8. Procédé selon l'une quelconque des revendications précédentes, **caractérisé en ce que** chaque zone de comparaison est comprise dans un domaine spectral correspondant à un voisinage de la zone d'intérêt.

9. Procédé selon l'une quelconque des revendications précédentes, **caractérisé en ce que** le moteur est un moteur d'aéronef, et **en ce que** l'acquisition spectrale de signaux vibratoires est réalisée en mesurant les vibrations du moteur pendant des phases d'accélération et de décélération en fonction des vitesses de rotation basse pression et haute pression pour former un ensemble de spectrogrammes correspondant à des contextes de fonctionnement du moteur.

10. Système d'analyse vibratoire d'un moteur, **caractérisé en ce qu'**il comporte:
- des moyens de traitement (3) configurés pour acquérir des signaux vibratoires relatifs au moteur (15) et pour former au moins un spectrogramme représentatif d'un état de fonctionnement dudit moteur,
- des moyens de traitement (3) configurés pour sélectionner au moins une zone d'intérêt (Z1) dans ledit au moins un spectrogramme,
- des moyens de traitement (3) configurés pour construire pour chaque zone d'intérêt (Z1) d'un vecteur d'intérêt représentatif de ladite zone d'intérêt en projetant ladite zone d'intérêt sur un espace de représentation sous-jacent,
- des moyens de traitement (3) configurés pour construire un ensemble de vecteurs de comparaison représentatif d'un ensemble de zones de comparaison correspondantes à ladite zone d'intérêt en projetant chacune desdites zones de comparaison sur ledit espace de représentation, ledit ensemble de zones de comparaison appartenant à des spectrogrammes annotés enregistrés dans une base de données de référence,
- des moyens de traitement (3) configurés pour calculer un score de similitude entre ledit vecteur d'intérêt et chacun desdits vecteurs de comparaison afin de déterminer un sous-ensemble de vecteurs de comparaison présentant un score de similitude supérieure à un niveau prédéterminé,
- des moyens de traitement (3) configurés pour sélectionner un sous-ensemble de zones de comparaison (C1-C6) associé audit sous-ensemble de vecteurs de comparaison, ledit sous-ensemble de zones de comparaison (C1-C6) ayant des comportements vibratoires similaires à ceux de ladite zone d'intérêt, et
- des moyens de sortie (9) configurés pour afficher ledit sous-ensemble de zones de comparaison et des annotations associées audit sous-ensemble de zones de comparaison.

## Patentansprüche

1. Verfahren zur Vibrationsanalyse eines Motors, **dadurch gekennzeichnet, dass** es die folgenden, durch Verarbeitungseinrichtungen (3) ausgeführten Schritte aufweist:
- Spektralerfassung von Vibrationssignalen bezüglich des Motors (15) zur Bildung von mindestens einem Spektrogramm, das einen Funktionszustand des Motors zeigt,
- Auswahl von mindestens einem Bereich von Interesse (Z1) in dem mindestens einen Spektrogramm,
- Konstruktion für jeden Bereich von Interesse (Z1) eines Vektors von Interesse, der den Bereich von Interesse darstellt, indem er den Bereich von Interesse auf einen zugrundeliegenden Darstellungsraum projiziert,
- Konstruktion einer Reihe von Vergleichsvektoren, die eine Reihe von Vergleichsbereichen zeigt, welche dem Bereich von Interesse entsprechen, indem jeder der Vergleichsbereiche auf den Darstellungsraum projiziert wird, wobei die Reihe von Vergleichsbereichen zu kommentierten Spektrogrammen gehört, welche in einer Bezugsdatenbank registriert sind,
- Berechnung eines Ähnlichkeitsergebnisses zwischen dem Vektor von Interesse und jedem der Vergleichsvektoren, um eine Teilmenge von Vergleichsvektoren zu bestimmen, die ein Ähnlichkeitsergebnis darstellen, das höher als eine vorgegebene Höhe ist,
- Auswahl einer der Teilmenge von Vergleichsvektoren zugeordneten Teilmenge von Vergleichsbereichen (C1-C6), wobei die Teilmenge von Vergleichsbereichen (C1-C6) Vibrationsverhaltensmuster aufweist, die ähnlich denen des Bereichs von Interesse sind, und
- Wiedergewinnung der Teilmenge von Vergleichsbereichen (C1-C6) und von der Teilmenge von Vergleichsbereichen zugeordneten Kommentierungen (n1-n6).

2. Verfahren nach Anspruch 1, **dadurch gekennzeichnet, dass** es die folgenden Schritte aufweist:
- Kommentierung des Bereichs von Interesse (Z1), und
- Registrierung des Bereichs von Interesse, der dem Bereich von Interesse zugeordneten Kommentierung sowie des den Bereich von Interesse enthaltenden Spektrogramms in der Bezugsdatenbank.

3. Verfahren nach Anspruch 1 oder 2, **dadurch gekennzeichnet, dass** die Projektion auf den Darstellungsraum gemäß einem Projektionsmodell oder einer Kombination von Projektionsmodellen aus den folgenden Modellen realisiert wird: physischem Modell, Lernmodell und mathematischem Modell.

4. Verfahren nach einem der vorhergehenden Ansprüche, **dadurch gekennzeichnet, dass** es eine Anzeige einer Liste der Teilmenge der Vergleichsbereiche enthält, welche als dem Bereich von Interesse am nächsten kommend diagnostiziert werden.

5. Verfahren nach Anspruch 4, **dadurch gekennzeichnet, dass** die Liste der Teilmenge von Vergleichsbereichen nach absteigender Reihenfolge der Ähnlichkeit geordnet ist und Statistikdaten sowie Kommentierungen enthält.

6. Verfahren nach einem der vorhergehenden Ansprüche, **dadurch gekennzeichnet, dass** es einen Reinigungsschritt des mindestens einen Spektrogramms oder des mindestens einen Bereichs von Interesse mit Hilfe eines Algorithmus zur Geräuschvermeidung aufweist.

7. Verfahren nach Anspruch 6, **dadurch gekennzeichnet, dass** der Algorithmus zur Geräuschvermeidung einem parametrischen Modell einer Gamma-Verteilung, einem statistischen Modell oder einem Phasenverschiebungsmodell entspricht.

8. Verfahren nach einem der vorhergehenden Ansprüche, **dadurch gekennzeichnet, dass** jeder Vergleichsbereich in einem Spektralbereich entsprechend einer Umgebung des Bereichs von Interesse enthalten ist.

9. Verfahren nach einem der vorhergehenden Ansprüche, **dadurch gekennzeichnet, dass** der Motor ein Luftfahrzeugmotor ist, und dass die Spektralerfassung von Vibrationssignalen dadurch verwirklicht wird, dass die Vibrationen des Motors während Beschleunigungs- und Verzögerungsphasen in Abhängigkeit der Drehzahlen bei niedrigem Druck und bei hohem Druck gemessen werden, um eine Reihe von Spektrogrammen entsprechend den Funktionsgegebenheiten des Motors zu bilden.

10. System zur Vibrationsanalyse eines Motors, **dadurch gekennzeichnet, dass** es Folgendes aufweist:
- Verarbeitungseinrichtungen (15), die zur Erfassung von Vibrationssignalen bezüglich des Motors (15) sowie zur Bildung von mindestens einem Spektrogramm konfiguriert sind, das einen Funktionszustand des Motors darstellt,
- Verarbeitungseinrichtungen (3), die zur Auswahl von mindestens einem Bereich von Interesse (Z1) in dem mindestens einen Spektrogramm konfiguriert sind,
- Verarbeitungseinrichtungen (3), die zur Ausführung für jeden Bereich von Interesse (Z1) eines den Bereich von Interesse darstellenden Vektors von Interesse konfiguriert sind, indem der Bereich von Interesse auf einen zugrundeliegenden Darstellungsraum projiziert wird,
- Verarbeitungseinrichtungen (3), die zur Ausführung einer Reihe von Vergleichsvektoren konfiguriert sind, welche eine Reihe von Vergleichsbereichen entsprechend dem Bereich von Interesse darstellen, indem jeder der Vergleichsbereiche auf den Darstellungsraum projiziert wird, wobei die Reihe von Vergleichsbereichen zu kommentierten Spektrogrammen gehört, die in einer Bezugsdatenbank registriert sind,
- Verarbeitungseinrichtungen (3), die zur Berechnung eines Ähnlichkeitsergebnisses zwischen dem Vektor von Interesse und jedem der Vergleichsvektoren konfiguriert sind, um eine Teilmenge von Vergleichsvektoren zu bestimmen, die ein Ähnlichkeitsergebnis zeigen, das höher als ein vorgegebener Wert ist,
- Verarbeitungseinrichtungen (3), die zur Auswahl einer Teilmenge von Vergleichsbereichen (C1-C6) konfiguriert sind, die der Teilmenge von Vergleichsvektoren zugeordnet ist, wobei die Teilmenge von Vergleichsbereichen (C1-C6) Vibrationsverhaltensmuster aufweisen, die vergleichbar mit denjenigen des Bereichs von Interesse sind, sowie
- Ausgabeeinrichtungen (9), die zur Anzeige der Teilmenge von Vergleichsbereichen sowie von Kommentierungen, die der Teilmenge von Vergleichsbereichen zugeordnet sind, konfiguriert sind.

## Claims

1. Method for the vibration analysis of an engine, **characterised in that** it comprises the following steps executed by processing means:
- spectral acquisition of vibration signals relating to the engine (15) in order to form at least one spectrogram that represents an operating state of said engine,
- selection of at least one zone of interest (Z1) in said at least one spectrogram,
- construction for each zone of interest (Z1) of a vector of interest that represents said zone of interest by projecting said zone of interest onto an underlying representation space,
- construction of a set of comparison vectors that is representative of a set of corresponding comparison zones with said zone of interest by projecting each one of said comparison zones onto said representation space, said set of comparison zones belonging to annotated spectrograms recorded in a reference database,
- calculation of a similarity score between said vector of interest and each one of said comparison vectors for determining a subset of comparison vectors that have a similarity score that exceeds a predetermined level,
- selection of a subset of comparison zones (C1-C6) associated to said subset of comparison vectors, said subset of comparison zones (C1-C6) having vibration behaviours similar to those of said zone of interest, and
- recovery of said subset of comparison zones (C1-C6) and annotations (n1-n6) associated with said subset of comparison zones.

2. Method according to claim 1, **characterised in that** it comprises the following steps:
- annotating said zone of interest (Z1), and
- recording in the reference database of said zone of interest, of the annotation associated to said zone of interest as well as the spectrogram containing said zone of interest.

3. Method according to claim 1, **characterised in that** the projection onto the representation space is carried out according to a projection model or a combination of projection models from among the following models: physical model, learning model, and mathematical model.

4. Method as claimed in claim 1, **characterised in that** it comprises a display of a list of said subset of comparison zones diagnosed as being the closest to the zone of interest.

5. Method according to claim 4, **characterised in that** said list of said subset of comparison zones is sorted in decreasing order of similarity and comprises statistical data and annotations.

6. Method as claimed in claim 1, **characterised in that** it comprises a step of cleaning said at least one spectrogram or said at least one zone of interest by means of a noise removal algorithm.

7. Method according to claim 6, **characterised in that** the noise removal algorithm corresponds to a parametric model of a Gamma law, a statistical model, or a phase shift model.

8. Method as claimed in claim 1, **characterised in that** each comparison zone is included in a spectral domain that corresponds to a vicinity of the zone of interest.

9. Method as claimed in claim 1, **characterised in that** the engine is an aircraft engine, and **in that** the spectral acquisition of vibration signals is carried out by measuring the vibrations of the engine during the acceleration and deceleration phases according to the low-pressure and high-pressure rotation speeds in order to form a set of spectrograms that correspond to operating contexts of the engine.

10. System for the vibration analysis of an engine, **characterised in that** it comprises:
- processing means (3) configured for acquiring vibration signals relating to the engine (15) and in order to form at least one spectrogram that represents an operating state of said engine,
- processing means (3) configured for selecting at least one zone of interest (Z1) in said at least one spectrogram,
- processing means (3) configured to construct for each zone of interest (Z1) of a vector of interest that represents said zone of interest by projecting said zone of interest onto an underlying representation space,
- processing means (3) configured to construct a set of comparison vectors that represent a set of corresponding comparison zones with said zone of interest by projecting each one of said comparison zones onto said representation space, said set of comparison zones belonging to annotated spectrograms recorded in a reference database,
- processing means (3) configured to calculate a similarity score between said vector of interest and each one of said comparison vectors in order to determine a subset of comparison vectors that have a similarity score that exceeds a predetermined level,
- processing means (3) configured to select a subset of comparison zones (C1-C6) associated with said subset of comparison vectors, said subset of comparison zones (C1-C6) having vibration behaviours similar to those of said zone of interest, and
- output means (9) configured for displaying said subset of comparison zones and annotations associated with said subset of comparison zones.
